# EUROPÄISCHE PATENTSCHRIFT

(11) **EP 2 457 308 B1**
(45) Veröffentlichungstag und Bekanntmachung des Hinweises auf die Patenterteilung: **30.04.2014**
(21) Anmeldenummer: 10730715.9
(22) Anmeldetag: 01.07.2010
(51) Int. Cl.: H02K 5/20, H02K 9/06, H02K 5/173, F04D 29/056, F04D 25/08, F04D 29/58, F04D 25/06

(54) **LÜFTER MIT EINEM ELEKTRONISCH KOMMUTIERTEN ANTRIEBSMOTOR**
FAN COMPRISING AN ELECTRONICALLY COMMUTATED DRIVE MOTOR
VENTILATEUR ÉQUIPÉ D'UN MOTEUR D'ENTRAÎNEMENT À COMMUTATION ÉLECTRONIQUE

(30) Priorität: 18.07.2009 DE 202009009840 U
(43) Veröffentlichungstag der Anmeldung: 30.05.2012
(73) Patentinhaber: Ebm-Papst St. Georgen GmbH & CO. KG, 78112 St. Georgen (DE)
(72) Erfinder: RAGG, Peter, 78141 Schönwald (DE)
(74) Vertreter: Raible, Tobias
(86) Internationale Anmeldenummer: PCT/EP2010/003970
(87) Internationale Veröffentlichungsnummer: WO 2011/009525

(56) Entgegenhaltungen:
- EP-A2- 1 050 682
- US-A1- 2003 210 992
- US-A1- 2006 093 475
- US-A1- 2008 122 322

## Beschreibung

Die Erfindung betrifft einen Lüfter mit einem elektronisch kommutierten Antriebsmotor.

Derartige Lüfter werden hauptsächlich als so genannte Gerätelüfter zum Kühlen elektronischer Geräte verwendet, z.B. zum Kühlen von Computern, Servern, Leiterplatten etc. Solche Lüfter müssen zwar extrem preiswert sein, doch wird andererseits von ihnen eine hohe Zuverlässigkeit und eine Lebensdauer erwartet, die zumindest so groß ist, wie die Lebensdauer des vom Lüfter gekühlten Geräts.

Derartige Lüfter enthalten verschiedene Elemente, z.B. Hallsensoren, ICs, Transistoren, Kondensatoren etc., ebenso Lager, z.B. Gleitlager, Wälzlager etc.

Dasjenige Element, das durch hohe Betriebstemperaturen am stärksten gefährdet ist, wird als das "leistungsbestimmende Element" bezeichnet. Das kann also - je nach Aufbau des Lüfters - ein elektronisches oder ein mechanisches Element sein.

Höhere Temperaturen treten besonders bei Lüftern mit einem Kunststoffgehäuse auf, da die im Betrieb entstehende Wärme durch den Kunststoff nur äußerst schlecht abgeleitet werden kann, so dass im Inneren eines solchen Lüfters heiße Bereiche entstehen können, die man auch als Wärmenester bezeichnen kann.

Die US 2003/0210992 A1 zeigt einen Lüfter mit einem Elektromotor, einem Lagerrohr mit einer Wand, die eine Innenseite und eine Außenseite hat, wobei das Lagerrohr in der Mitte eines Rahmens angeordnet ist, einen außerhalb des Lagerrohrs angeordneten Stator, einen im Betrieb mit dem Stator zusammen wirkenden Rotor, an dessen Außenumfang Flügel angeordnet sind, auf der Innenseite des Lagerrohrs angeordnete Lager und eine mit dem Rotor verbundene Welle, welche mit den Lagern zusammenwirkt.

Die US 2008/0122322 A1 und die EP 1 050 682 A2 zeigen jeweils einen Lüfter, bei dem Kühlluft durch Öffnungen im Statorkern hindurchfließen kann.

Die US 2006/0093475 A1 zeigt einen Lüfter, bei dem die Lüfterflügel Kühlluft in einem äußeren Bereich und auch in einem inneren Bereich durch eine Öffnung des Rotors in die jeweils gleiche vorgegebene Förderrichtung transportieren.

Es ist deshalb eine Aufgabe der Erfindung, einen neuen Lüfter bereit zu stellen.

Diese Aufgabe wird nach der Erfindung gelöst durch einen Lüfter gemäß Patentanspruch 1. Durch die in der Wand des Lagerrohres vorgesehenen Kanäle kann zwischen dem Innenstator und den Lagerelementen Kühlmittel, also im allgemeinen Luft, durchströmen, so dass die im Statorblechpaket entstehende Verlustwärme nicht direkt auf die Lagerelemente im Lagerrohr übertragen werden kann. Dies gilt besonders für das Lagerelement im Bereich des Rotorbodens, dessen Temperatur durch das Kühlmittel gesenkt wird, so dass die Temperatur an dieser neuralgischen Stelle reduziert werden kann, was die Lebensdauer des dortigen Lagerelements - und damit die Lebensdauer des Lüfters insgesamt - entsprechend erhöht.

Bei geeigneter Gestaltung kann ein solches Lagerrohr sehr leicht und materialsparend ausgebildet, dabei aber ausreichend steif und funktionsadäquat sein, z.B. hinsichtlich der Kühlung an kritischen Stellen.

Weitere Einzelheiten und vorteilhafte Weiterbildungen der Erfindung ergeben sich aus dem im Folgenden beschriebenen und in der Zeichnung dargestellten in keiner Weise als Einschränkung der Erfindung zu verstehenden Ausführungsbeispiel, sowie aus den Unteransprüchen. Es zeigt:
- Fig. 1: die perspektivische Darstellung des Gehäuses eines Axiallüfters vor der Montage des Antriebsmotors und des Lüfterrads; in der Mitte sieht man das Lagerrohr,
- Fig. 2: eine Darstellung analog Fig. 1, aus einem etwas anderen Blickwinkel und in stark vergrößertem Maßstab,
- Fig. 3: eine Darstellung, gesehen von der Unterseite der Darstellung der Fig. 2, also in Richtung des Pfeiles III der Fig. 1,
- Fig. 4: die Darstellung eines Rotors, auf dem ein Lüfterrad angeordnet ist,
- Fig. 5: eine perspektivische Darstellung von Gehäuse, Antriebsmotor und Lüfterrad, gesehen etwa in Richtung des Pfeiles III der Fig. 1,
- Fig. 6: eine perspektivische Darstellung von Gehäuse, Antriebsmotor und Lüfterrad, gesehen aus einer ähnlichen Perspektive wie in Fig. 1,
- Fig. 7: einen Längsschnitt durch den montierten Lüfter, ähnlich der Darstellung der Fig. 5,
- Fig. 8: eine Darstellung von Messkurven; diese Figur zeigt die Messungen bei einem Lüfter ohne Kanäle im Lagerrohr und bei Verwendung eines Standardrotors ohne Radial-Lüfterrad,
- Fig. 9: eine Darstellung analog Fig. 8 bei einem Lüfter von gleicher Größe wie in Fig. 8, aber mit Radial-Lüfterrad im Rotor und mit Kanälen im Lagerrohr, die hier jedoch verschlossen sind, so dass keine Luft durch sie durchströmen kann, und
- Fig. 10: eine Darstellung analog Fig. 8 und 9 bei einem Lüfter gleicher Größe wie in diesen Figuren, jedoch mit Radial-Lüfterrad im Rotor und mit Kanälen in der Wand des Lagerrohrs, die geöffnet sind, so dass im Betrieb Luft durch sie durchströmt, wie das in Fig. 7 schematisch angedeutet ist.

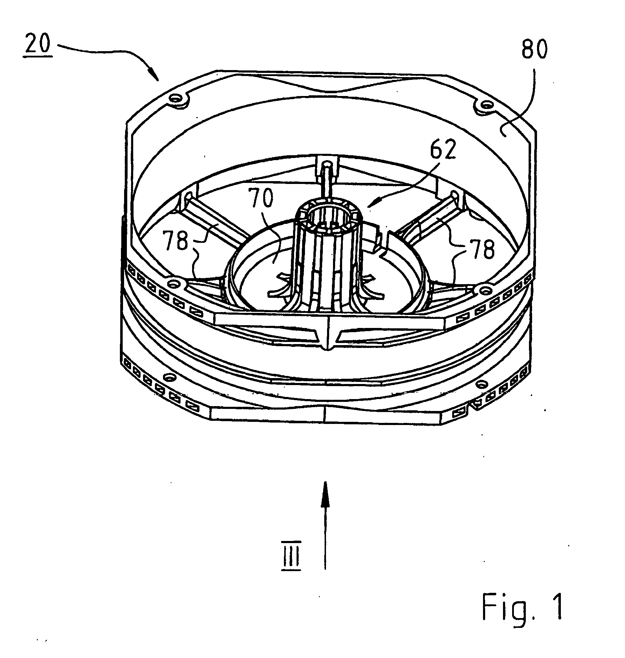

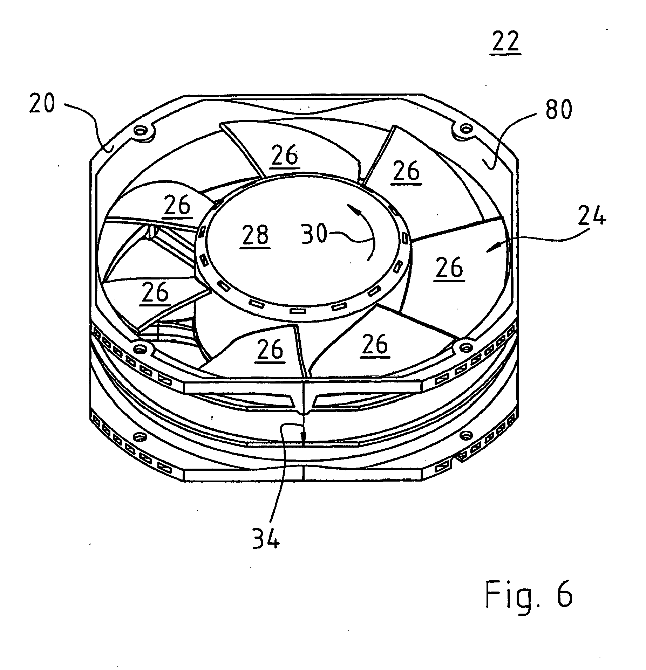

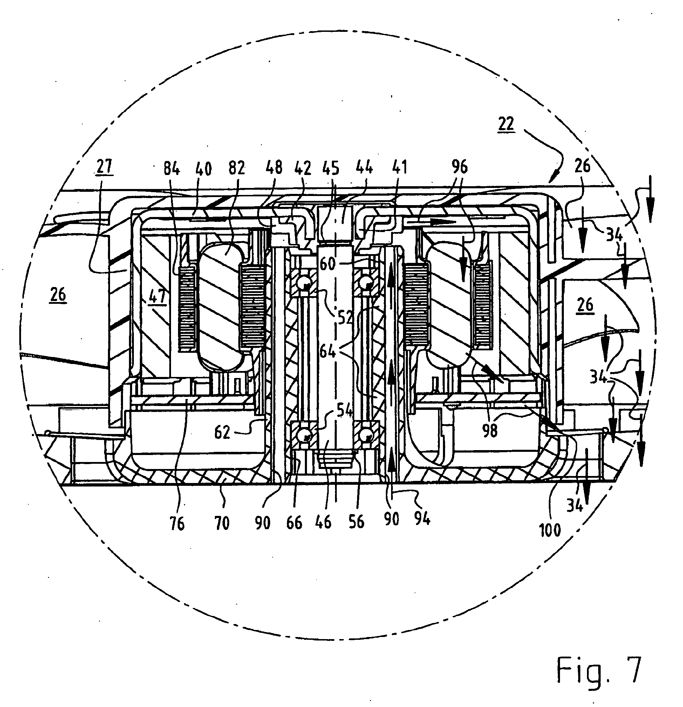

**Fig. 1** zeigt das Gehäuse 20 eines typischen Gerätelüfters 22, wie er im zusammengebauten Zustand in Fig. 6 dargestellt ist. Der Lüfter 22 hat hier ein Lüfterrad 24 mit sieben Lüfterflügeln 26, die am zentralen Rotor 28 eines Antriebsmotors 27 befestigt sind und sich bei Fig. 6 in Richtung eines Pfeiles 30 drehen, also entgegen dem Uhrzeigersinn, so dass die Luft bei Fig. 6 in Richtung eines Pfeiles 34, also von oben nach unten, durch den Lüfter 22 transportiert wird. Dadurch entsteht eine entsprechende Druckdifferenz am Lüfter 22, d.h. in Fig. 6 ist der Druck unten größer als oben. Die Durchströmrichtung 34 der transportierten Luft ist auch in Fig. 7 schematisch für die rechte Hälfte dieser Figur dargestellt.

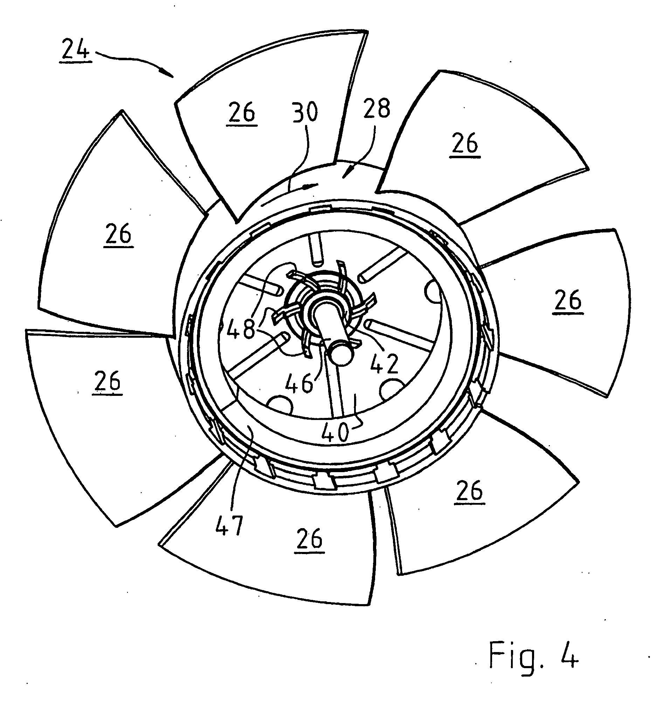

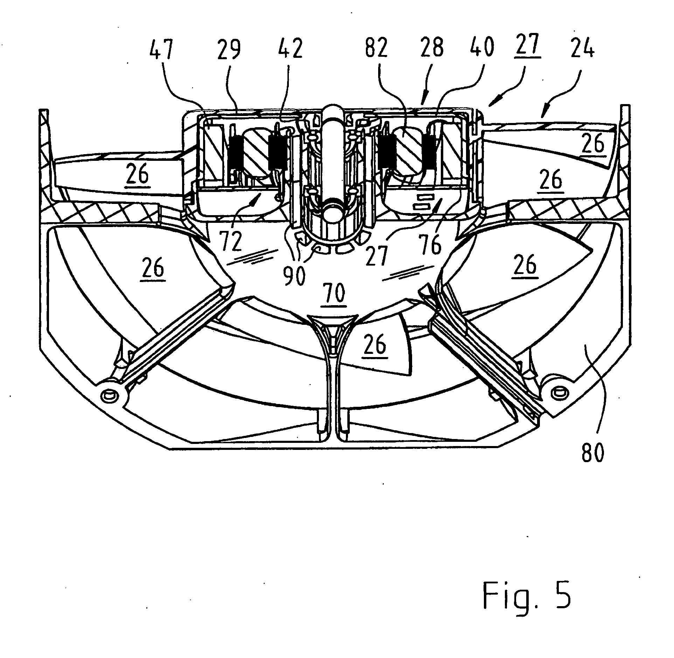

Das Lüfterrad 24 ist in Fig. 4 von der - in Fig. 6 unteren - Seite dargestellt. Der Rotor 28 hat auf seiner Außenseite ein topf- oder glockenförmiges Gehäuse 29 aus Kunststoff, das einstückig mit den Flügeln 26 ist, wie Fig. 5 klar zeigt.

Im Gehäuse 29 ist ein magnetisches Rückschlussteil 40 durch Einspritzen (molding) befestigt, dessen Form am besten aus Fig. 7 hervorgeht. In einem Kragen 41 in der Mitte des Rückschlussteils 40 ist mittels einer geeigneten Metalllegierung 42, z.B. ZAMAK, das in Fig. 7 obere Ende 44 einer Rotorwelle 46 eingegossen. Beim Gießvorgang wird bevorzugt auch ein kleines Radiallüfterrad 48 erzeugt, das dort im Betrieb die Luft in Bewegung hält und die Kühlung verbessert, besonders im Bereich der Wickelköpfe. In manchen Fällen ist ein solches Lüfterrad nicht erforderlich, was durch Versuche ermittelt wird. Das obere Ende 44 der Welle 46 hat eine Ringnut 45, in welche die Metalllegierung 42 eingreift, vgl. Fig. 7. Im Rückschlussteil 40 ist ein mehrpoliger, radial magnetisierter Magnetring 47 befestigt.

Die Welle 46 ist in zwei Lagern 52, 54 gelagert, hier in Kugellagern, deren Innenringe auf die Welle 46 aufgeschoben sind. Der Innenring des in Fig. 7 unteren Lagers 54 ist zusätzlich durch einen Sprengring 56 gehalten.

Der Außenring des oberen Lagers 52 ist von oben in eine Ausnehmung 60 eines Lagerrohres 62 bis zu einem Anschlag 64 eingepresst, und ebenso ist der Außenring des unteren Lagers 54 von unten in eine Ausnehmung 66 des Lagerrohres 62 bis zum gleichen Anschlag 64 eingepresst. Dieser hält die beiden Außenringe in einem vorgegebenen Abstand.

Das Lagerrohr 62 hat eine Wand 59, deren Innenseite mit 61 und deren Außenseite mit 63 bezeichnet ist. Es ist aus einem geeigneten Kunststoff hergestellt, der die notwendige mechanische Stabilität und Wärmebeständigkeit hat. Es ist hier einstückig mit einem Flansch 70, dessen Funktion es ist, den Innenstator 72 des Antriebsmotors 27 und die zugehörige Leiterplatte 76 für die Motorelektronik zu tragen. Dieser Flansch 70 ist über Speichen 78 im Außenring 80 des Gehäuses 20 gehalten.

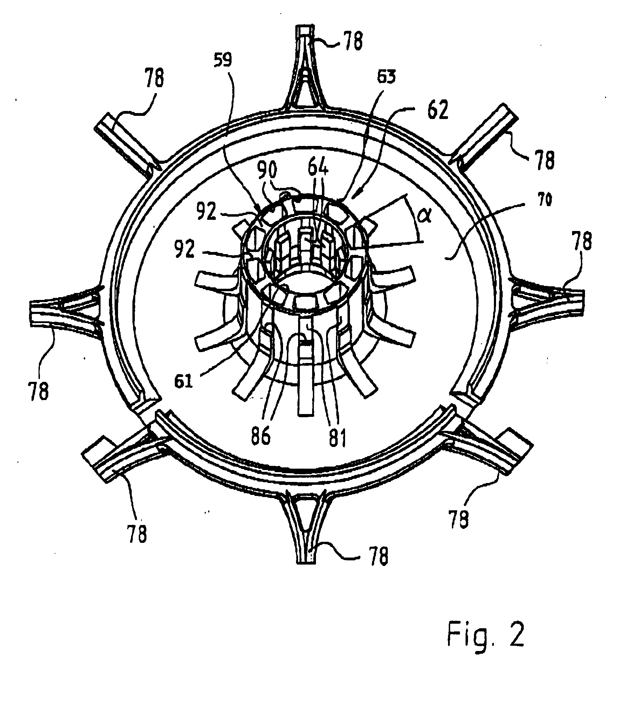

Der Innenstator 72 hat ein mit einer Statorwicklung 82 versehenes Blechpaket 84, vgl. Fig. 7, das auf Rippen 81 auf der Außenseite 63 des Lagerrohres 62 bis zu einem Anschlag 86 (Fig. 2) aufgepresst ist, so dass Verlustwärme aus dem Blechpaket 84 auf die Wand 59 des Lagerrohrs 62 und über dieses besonders auf das obere Lager 52 (Fig. 7) übertragen wird.

Die Wand 59 des Lagerrohrs 62 ist mit beispielsweise zehn durchgehenden Kanälen 90 (Fig. 2) versehen, deren Winkelerstreckung alpha z.B. 25° betragen kann. Zwischen diesen erstrecken sich radiale Rippen 92 mit einer Winkelerstreckung von z.B. 11 °, d.h. die Winkelerstreckung der Kanäle 90 ist etwa das 1,5 bis Dreifache der Winkelerstreckung der Rippen 92. Die Rippen 81 liegen radial außerhalb der Kanäle 90.

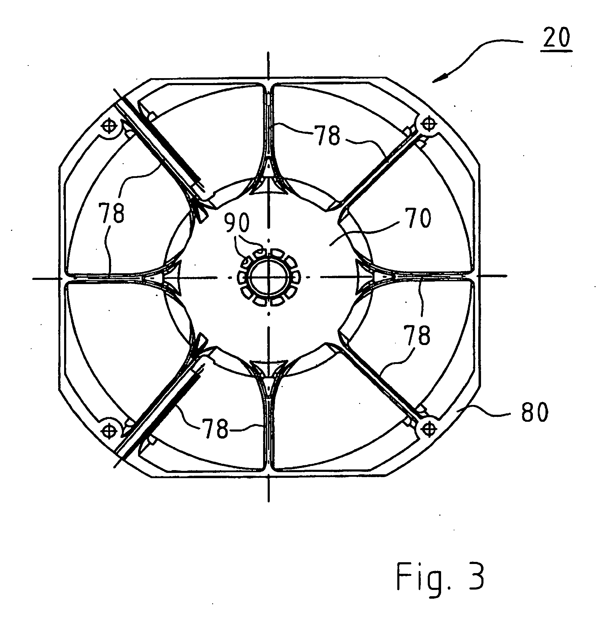

Wie die Fig. 3 und 5 zeigen, erstrecken sich die Kanäle 90 durch den Flansch 70, so dass in Fig. 7 Kühlluft von der Druckseite (unten) des Lüfters 22 durch die Kanäle 90 nach oben strömen kann, wie durch Pfeile 94 schematisch und nur für die rechte Seite der Fig. 7 angedeutet. Diese Luft 94 kühlt die Wand des Lagerrohrs 62 und transportiert die Wärme, die aus dem Blechpaket 84 in das Lagerrohr 62 gelangt, in Fig. 7 nach oben.

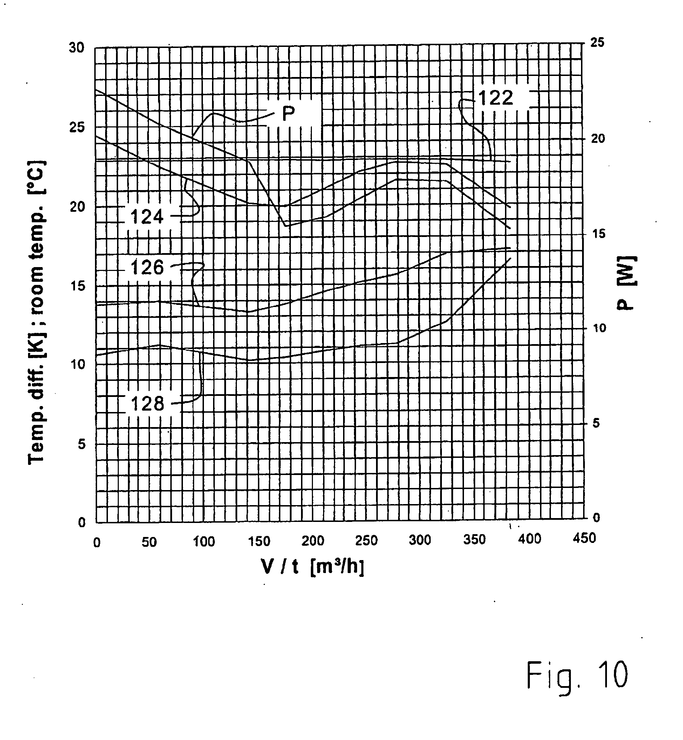

Dort strömt diese Luft längs der Pfeile 96 über die Wickelköpfe der Statorwicklung 82, zwischen den Statorpolen nach unten, und dann von dort längs Pfeilen 98 zu einem Spalt 100 zwischen dem Rotor 28 und dem Flansch 70, und wird dort durch die in Richtung der Pfeile 34 vorbei strömende Luft mitgerissen (Venturieffekt), so dass im Innenstator 72 während des Betriebs eine ständige und kräftige Luftzirkulation stattfindet, die vor allem das obere Lager 52 und die Statorwicklung 82 kühlt und dadurch die Lebensdauer des Lüfters 22 verlängert, vgl. Fig. 10.

Das Lagerrohr 62 hat also im Querschnitt eine Wabenstruktur, was es ermöglicht, die Lebensdauer des Lüfters ohne Mehraufwand zu verlängern. Dabei bewirkt das Radiallüfterrad 48, falls vorhanden, eine Verteilung der zirkulierenden Luft in dem in Fig. 7 oberen Teil des Innenstators 72, und dadurch eine gleichmäßige Kühlung.

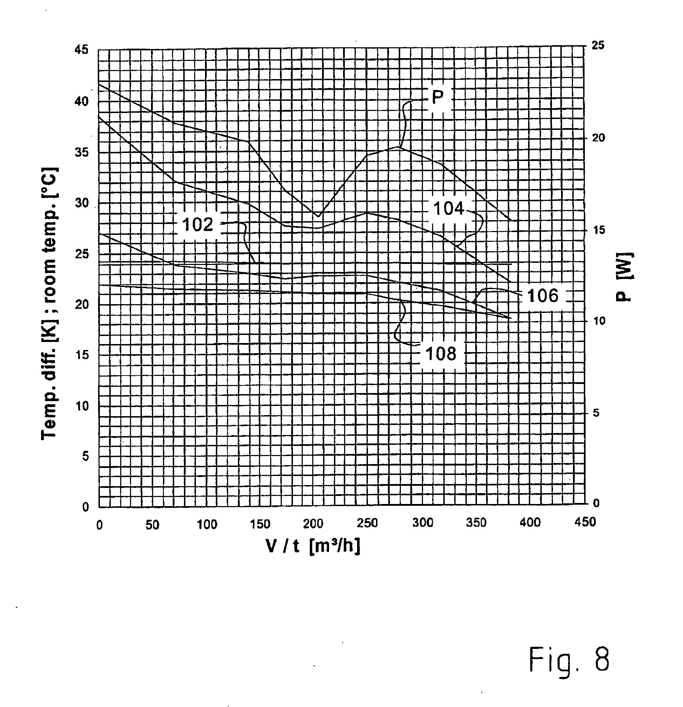

**Fig. 8** zeigt Messkurven für einen Standardlüfter, bei dem im Rotor 28 kein Radiallüfterrad vorgesehen ist und ein massives Lagerrohr ohne Wabenstruktur verwendet wird.

Mit P ist die elektrische Leistung bezeichnet, deren Skala in Fig. 8 rechts dargestellt ist.

Die gemessene Raumtemperatur ist mit 102 bezeichnet und beträgt hier 24°C.

104 ist die Temperaturdifferenz der Statorwicklung 82 (Fig. 7) relativ zur Raumtemperatur 102, d.h. beim Volumenstrom 0 beträgt diese Temperaturdifferenz 38 K und sinkt bei 380 m3/h auf 22 K.

106 ist die Temperaturdifferenz des oberen Kugellagers 52, und 108 ist die Temperatur des unteren Kugellagers 54, beide relativ zur Raumtemperatur. Man erkennt, dass das in Fig. 7 obere Kugellager 52 wärmer wird als das untere Kugellager 54, weil das obere Kugellager schlechter gekühlt wird.

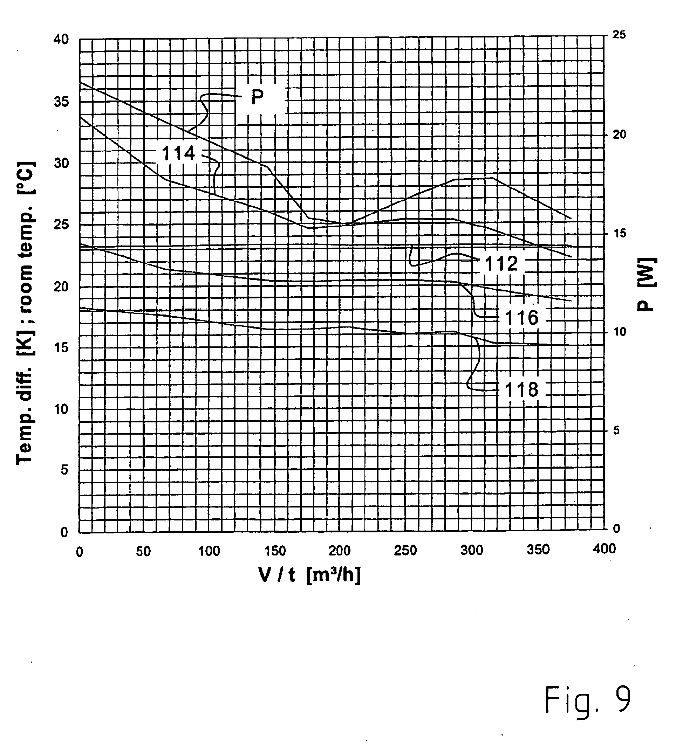

**Fig. 9** zeigt Messkurven für ein Lagerrohr 62 mit Wabenstruktur, bei dem aber die Kanäle 90 verschlossen sind.

Mit P ist wieder die elektrische Leistung bezeichnet, die einen ähnlichen Verlauf zeigt wie in Fig. 8 und deren Skala in Fig. 9 ebenfalls rechts dargestellt ist.

Die Raumtemperatur ist mit 112 bezeichnet und beträgt hier 23° C.

114 ist die Temperaturdifferenz der Statorwicklung 82 relativ zur Raumtemperatur.

116 ist die Temperaturdifferenz des oberen Kugellagers 52 relativ zur Raumtemperatur. Die Kurve 118 zeigt die Temperaturdifferenz des unteren Kugellagers 54 relativ zum Raumtemperatur. Man erkennt, dass das obere Kugellager 52 etwa 5 K wärmer ist als das untere Kugellager 54.

**Fig. 10** zeigt Messkurven für ein Lagerrohr 62 mit Wabenstruktur wie in Fig. 2 dargestellt, wobei die Kanäle 90 offen sind, so dass Luft durch die Kanäle 90 und den Motor 27 strömt, wie in Fig. 7 durch die Strömungspfeile 94, 96, 98 schematisch angedeutet. Auch ist das Radiallüfterrad 48 (Fig. 4) vorgesehen. Mit P ist wieder die elektrische Leistung bezeichnet.

Ein Vergleich der Fig. 9 und 10 zeigt den erheblichen Unterschied.

Die Raumtemperatur ist bei Fig. 10 mit 122 bezeichnet und beträgt hier 23° C.

Der Unterschied der Wicklungstemperatur zur Raumtemperatur ist mit 124 bezeichnet und etwas niedriger als in Fig. 9, weil die Wicklung 82 besser gekühlt wird.

Der Temperaturunterschied des oberen Kugellagers 52 zur Raumtemperatur ist mit 126 bezeichnet und ist hier 10 K niedriger als bei Fig. 9, d.h. das obere Kugellager 52 wird bei

Fig. 10 wesentlich besser gekühlt als bei Fig. 9.

Der Temperaturunterschied des unteren Kugellagers 54 zur Raumtemperatur 122 ist mit 128 bezeichnet. Dieser ist etwa 7 K kleiner als in Fig. 9, d.h. auch das Lager 54 wird wesentlich besser gekühlt, so dass sich insgesamt durch die Maßnahmen nach den Fig. 1 bis 7 eine wesentlich höhere Lebensdauer des Lüfters 22 ergibt, ohne dass hierfür Mehrkosten notwendig wären.

Naturgemäß sind im Rahmen der Erfindung vielfache Abwandlungen und Modifikationen möglich.

## Patentansprüche

1. Lüfter mit einem elektronisch kommutierten Antriebsmotor (27), welcher Lüfter (22) aufweist:
Ein Lagerrohr (62) mit einer Wand (59), die eine Innenseite (61) und eine Außenseite (63) hat, welches Lagerrohr (62) an einem Flansch (70) angeordnet ist;
einen im Bereich der Außenseite (63) des Lagerrohres (62) angeordneten Innenstator (72) des Antriebsmotors (27), welcher Innenstator (72) ein Statorblechpaket (84) aufweist;
einen im Betrieb mit dem Innenstator (72) zusammen wirkenden Außenrotor (28), an dessen Außenumfang Lüfterflügel (26) des Lüfters (22) angeordnet sind;
auf der Innenseite (61) der Wand (59) des Lagerrohres (62) angeordnete Lagerelemente (52, 54);
eine mit dem Außenrotor (28) verbundene Welle (46), welche mittels dieser Lagerelemente (52, 54) im Lagerrohr (62) gelagert ist;
**gekennzeichnet durch**
in der Wand (59) des Lagerrohres (62) vorgesehene Kanäle (90), von denen sich mindestens ein Teil auch **durch** den Flansch (70) erstreckt,
welche Kanäle (90) im Betrieb des Lüfters (22) ein Strömen von Kühlluft (94) von der Druckseite des Lüfters (22) **durch** den Flansch (70) und die Kanäle (90) in der Wand (59) des Lagerrohres (62) in das Innere des Außenrotors (28) ermöglichen,
wobei sich die **durch** die Kühlluft (94) gekühlte Wand (59) des Lagerrohres (62) zwischen den Lagerelementen (52, 54) und dem Statorblechpaket (84) erstreckt, um das Lagerrohr (62), und über dieses die in ihm angeordneten Lagerelemente (52, 54), mit Kühlluft von der Druckseite des Lüfters (22) zu kühlen.

2. Lüfter nach Anspruch 1, bei welchem das Lagerrohr (62) zumindest teilweise aus Kunststoff ausgebildet ist.

3. Lüfter nach einem der vorhergehenden Ansprüche, bei welchem die in der Wand (59) des Lagerrohrs (62) vorgesehenen Kanäle (90), im Querschnitt gesehen, nach Art von Waben nebeneinander angeordnet sind.

4. Lüfter nach einem der vorhergehenden Ansprüche, bei welchem in der Wand (59) des Lagerrohrs (62) zwischen den Kanälen (90) Trägerabschnitte (92) vorgesehen sind, welche sich von innen nach außen erstrecken.

5. Lüfter nach Anspruch 4, bei welchem, in Umfangsrichtung gesehen, die mittiere Erstreckung der Kühlkanäle (90) etwa das 1,5- bis etwa das Dreifache der mittleren Erstreckung der Trägerabschnitte (92) beträgt.

6. Lüfter nach einem der vorhergehenden Ansprüche, bei welchem auf der Innenseite (61) des Lagerrohres (62) Anschläge (64) für ein Lagerelement (52, 54) vorgesehen sind.

7. Lüfter nach einem der vorhergehenden Ansprüche, bei welchem das Kühlmittel Luft ist, welche durch einen vom Lüfter (22) im Betrieb erzeugten Druckunterschied durch die in der Wand des Lagerrohrs (62) vorgesehenen Kühlkanäle (90) bewegt wird.

8. Lüfter nach einem der vorhergehenden Ansprüche, bei welchem der Rotor (28) nach Art einer Glocke ausgebildet ist, an deren Boden die Welle (46) des Rotors (28) befestigt ist.

9. Lüfter nach Anspruch 8, bei welchem die Welle (46) des Rotors (28) In eine Ausnehmung am Boden der Glocke eingegossen ist.

10. Lüfter nach Anspruch 9, bei welchem aus dem Werkstoff, mittels dessen die Welle (46) in die Ausnehmung am Boden der Glocke eingegossen ist, ein Radiallüfterrad (48) ausgebildet ist, welches die Funktion hat, das aus den in der Wand des Lagerrohrs (62) vorgesehenen Kühlkanälen (90) ausströmende Kühlmittel im Bereich des Bodens der Glocke zu verteilen.

11. Lüfter nach einem der vorhergehenden Ansprüche, bei welchem für den Austritt des Kühlmittels aus dem Lüfter (22) ein Spalt (100) vorgesehen ist, an welchem im Betrieb die von dem Lüfter geförderte Luft vorbei strömt (34) und dadurch im Bereich dieses Spalts (100) einen Unterdruck erzeugt.

## Claims

1. Fan having an electronically commutated drive motor (27), which fan (22) has:
a bearing tube (62) with a wall (59) which has an inner side (61) and an outer side (63), which bearing tube (62) is arranged on a flange (70);
an internal stator (72) of the drive motor (27), which internal stator (72) is arranged in the region of the outer side (63) of the bearing tube (62) and has a stator lamination stack (84);
an external rotor (28) which cooperates with the internal stator (72) during operation and at the outer periphery of which fan blades (26) of the fan (22) are arranged;
bearing elements (52, 54) arranged on the inner side (61) of the wall (59) of the bearing tube (62);
a shaft (46) which is connected to the external rotor (28) and is supported by means of these bearing elements (52, 54) in the bearing tube (62);
**characterised by**
conduits (90) which are provided in the wall (59) of the bearing tube (62) and at least some of which also extend through the flange (70),
which conduits (90) during operation of the fan (22) enable a flow of cooling air (94) from the discharge side of the fan (22) through the flange (70) and the conduits (90) in the wall (59) of the bearing tube (62) into the interior of the external rotor (28),
the wall (59) of the bearing tube (62), which wall is cooled by the cooling air (94), extending between the bearing elements (52, 54) and the stator lamination stack (84), in order to cool the bearing tube (62), and via the latter the bearing elements (52, 54) arranged therein, with cooling air from the discharge side of the fan (22).

2. Fan according to Claim 1, wherein the bearing tube (62) is formed, at least in part, of plastic material.

3. Fan according to one of the preceding claims, wherein the conduits (90) provided in the wall (59) of the bearing tube (62) are arranged, viewed in cross-section, in the manner of honeycomb cells one beside the other.

4. Fan according to one of the preceding claims, wherein, in the wall (59) of the bearing tube (62), carrier segments (92) are provided between the conduits (90), these segments extending from the inside towards the outside.

5. Fan according to Claim 4, wherein, viewed in the circumferential direction, the average angular extent of the cooling conduits (90) is about 1.5 to about 3 times the average angular extent of the carrier segments (92).

6. Fan according to one of the preceding claims, wherein stops (64) for a bearing element (52, 54) are provided on the inner side (61) of the bearing tube (62).

7. Fan according to one of the preceding claims, wherein the coolant is air which is moved, by a pressure difference generated by the fan (22) during operation, through the cooling conduits (90) provided in the wall of the bearing tube (62).

8. Fan according to one of the preceding claims, wherein the rotor (28) is configured in the manner of a bell, to the bottom of which the shaft (46) of the rotor (28) is attached.

9. Fan according to Claim 8, wherein the shaft (46) of the rotor (28) is cast into a recess at the bottom of the bell.

10. Fan according to Claim 9, wherein a radial fan wheel (48) is formed from the material by means of which the shaft (46) is cast into the recess at the bottom of the bell, which fan wheel has the function of distributing, in the region of the bottom of the bell, the coolant flowing out of the cooling conduits (90) provided in the wall of the bearing tube (62).

11. Fan according to one of the preceding claims, wherein, for the discharge of the coolant from the fan (22), a gap (100) is provided, past which during operation the air conveyed by the fan flows (34) and thereby creates an underpressure in the region of this gap (100).

## Revendications

1. Ventilateur équipé d'un moteur d'entraînement à commutation électronique (27), lequel ventilateur (22) comporte :
un tube palier (62) avec une paroi (59) qui présente un côté intérieur (61) et un côté extérieur (63), lequel tube palier (62) est disposé sur un flasque (70) ;
un stator intérieur (72) du moteur d'entraînement (27) disposé dans la zone du côté extérieur (63) du tube palier (62), lequel stator intérieur (72) comporte un paquet de tôles statoriques (84) ;
un rotor extérieur (28) qui coopère en fonctionnement avec le stator intérieur (72) et à la périphérie extérieure duquel sont disposées des ailettes de ventilateur (26) du ventilateur (22) ;
des éléments de palier (52, 54) disposés du côté intérieur (61) de la paroi (59) du tube palier (62) ;
un arbre (46) relié au rotor extérieur (28), lequel est supporté dans le tube palier (62) au moyen de ces éléments de palier (52, 54) ;
**caractérisé par**
des canaux (90) prévus dans la paroi (59) du tube palier (62), dont au moins une partie s'étend aussi à travers le flasque (70),
lesquels canaux (90) permettent, pendant le fonctionnement du ventilateur (22), un écoulement d'air de refroidissement (94) du côté refoulement du ventilateur (22) dans l'intérieur du rotor extérieur (28) à travers le flasque (70) et les canaux (90) dans la paroi (59) du tube palier (62),
la paroi (59) du tube palier (62) refroidie par l'air de refroidissement (94) s'étendant entre les éléments de palier (52, 54) et le paquet de tôles statoriques (84) afin de refroidir le tube palier (62) et, par son intermédiaire, les éléments de palier (52, 54) disposés à l'intérieur de celui-ci avec de l'air de refroidissement venant du côté refoulement du ventilateur (22).

2. Ventilateur selon la revendication 1, dans lequel le tube palier (62) est réalisé au moins partiellement en matière plastique.

3. Ventilateur selon une des revendications précédentes, dans lequel les canaux (90) prévus dans la paroi (59) du tube palier (62), vus en coupe transversale, sont disposés les uns à côté des autres à la manière de rayons de ruche.

4. Ventilateur selon une des revendications précédentes, dans lequel des parties de support (92) sont prévues entre les canaux (90) dans la paroi (59) du tube palier (62), lesquelles s'étendent de l'intérieur vers l'extérieur.

5. Ventilateur selon la revendication 4, dans lequel, vu en direction périphérique, l'extension moyenne des canaux de refroidissement (90) est environ 1,5 fois à environ trois fois supérieure à l'extension moyenne des parties de support (92).

6. Ventilateur selon une des revendications précédentes, dans lequel des butées (64) pour un élément de palier (52, 54) sont prévues du côté intérieur (61) du tube palier (62).

7. Ventilateur selon une des revendications précédentes, dans lequel le fluide de refroidissement est de l'air, lequel est mis en mouvement à travers les canaux de refroidissement (90) prévus dans la paroi du tube palier (62) par une différence de pression produite par le ventilateur (22) en fonctionnement.

8. Ventilateur selon une des revendications précédentes, dans lequel le rotor (28) est réalisé à la manière d'une cloche au fond de laquelle l'arbre (46) du rotor (28) est fixé.

9. Ventilateur selon la revendication 8, dans lequel l'arbre (46) du rotor (28) est scellé dans un évidement au fond de la cloche.

10. Ventilateur selon la revendication 9, dans lequel une roue de ventilateur radial (48) est formée à partir du matériau au moyen duquel l'arbre (46) est scellé dans l'évidement au fond de la cloche, laquelle a pour fonction de répartir dans la zone du fond de la cloche le fluide de refroidissement provenant des canaux de refroidissement (90) prévus dans la paroi du tube palier (62).

11. Ventilateur selon une des revendications précédentes, dans lequel une fente (100) est prévue pour la sortie du fluide de refroidissement du ventilateur (22), devant laquelle, en fonctionnement, l'air refoulé par le ventilateur passe (34) et produit de ce fait une dépression au niveau de cette fente (100).
